# FASCICULE DE BREVET EUROPEEN

(11) **EP 1 575 222 B1**
(45) Date de publication et mention de la délivrance du brevet: **15.10.2008**
(21) Numéro de dépôt: 04291341.8
(22) Date de dépôt: 28.05.2004
(51) Int. Cl.: H04L 12/56

(54) **Procédé et dispositif de commutation par paquets entre des agents**
Vorrichtung und Verfahren zur Paketvermittlung zwischen Agenten
System and process for packet switching between agents

(30) Priorité: 02.03.2004 FR 0402149
(43) Date de publication de la demande: 14.09.2005
(73) Titulaire: Arteris, 75008 Paris (FR)
(72) Inventeur: Douady, César, 91400 Orsay (FR); Boucard, Philippe, 78150 Le Chesnay (FR)
(74) Mandataire: Casalonga, Axel

(56) Documents cités:
- EP-A- 1 182 819
- EP-A- 1 206 077
- US-A1- 2004 017 820
- BENINI L ET AL: "NETWORKS ON CHIPS: A NEW SOC PARADIGM" COMPUTER, IEEE COMPUTER SOCIETY, LONG BEACH., CA, US, vol. 35, no. 1, janvier 2002 (2002-01), pages 70-78, XP001091890 ISSN: 0018-9162
- LIU, MA, EL ZARKI, GUPTA: "error control schemes for networks: an overview" MOBILE NETWORKS AND APPLICATIONS, vol. 2, no. 2, octobre 1997 (1997-10), pages 167-182, XP002296032 KLUWER ACADEMIC PUBLISHERS, HINGHAM, MA, USA

## Description

La présente invention concerne le domaine de la communication entre des modules interconnectés.

Dans le domaine de l'informatique, les systèmes classiques sont centrés autour d'un bus spécialisé qui interconnecte plusieurs agents entre eux. On entend ici par « agent », un élément susceptible de recevoir ou d'émettre des données sur un bus, par exemple une unité centrale, une mémoire, un dispositif d'entrée/sortie, etc.

Suivant un protocole spécifique et propre au bus, un seul agent peut émettre simultanément un message sur le bus. L'exécution d'un traitement impose d'avoir des opérandes présentes dans l'agent qui va exécuter le traitement et par conséquent réclame le transfert de données entre agents par l'intermédiaire du système de communication. On entend ici par « opérande » un élément sur lequel porte une opération.

Par exemple, un système comprenant un coprocesseur arithmétique et une mémoire de type SDRAM qui contient des données doit, pour qu'une opération puisse être exécutée, transférer les opérandes stockées dans la mémoire par l'intermédiaire du contrôleur de la mémoire, puis par l'intermédiaire du bus vers le coprocesseur. Les résultats de l'opération seront transférés sur le même bus.

Il en résulte une limitation du nombre des échanges due à l'utilisation d'un bus qui forme une ressource de communication unique et bornée, la bande passante du système de communication formé par le bus étant finie.

Dans des applications où une performance élevée est nécessaire, l'exécution d'un programme nécessite une organisation spécifique des instructions pour optimiser et séquencer au mieux les différents échanges entre les agents qui sont connectés au bus de communication, afin d'optimiser l'utilisation de la bande passante. Les compilateurs peuvent prendre en charge ce type de problème, mais d'une façon non optimale et moyennant qu'une partie des ressources du système soit utilisée pour la gestion de ces échanges. Le système perd alors en efficacité et les performances se dégradent d'autant plus vite qu'un nombre élevé d'agents se trouvent présents sur le bus de communication.

Par ailleurs, il est possible de connecter entre eux deux bus distincts, par exemple de type PCI, au moyen d'un pont permettant un transfert de données d'un bus vers un autre. Une telle architecture est connue par le document <http://www.hitachi-ul.co.jp/PROP/IP/epharaohip.html>. Se présente alors une difficulté en cas d'erreur de transfert de données, par exemple vers une adresse n'existant pas dans l'autre bus. Les techniques actuelles ne permettent pas de gérer de façon satisfaisante ce genre de situations.

L'invention vise à remédier aux inconvénients du système classique évoqué ci-dessus.

Il est souhaitable que plusieurs requêtes puissent être émises simultanément entre les différents agents présents et que tous les agents puissent travailler en parallèle et de façon séquentielle sans qu'il soit nécessaire d'avoir un séquenceur général pour ordonnancer le flux général de données.

L'invention propose un système et un procédé de communication point à point particulièrement performants, permettant des communications sûres entre différents agents tout en gérant de façon judicieuse les messages erronés.

Le document EP 0757318 prévoit un système de communication sur un réseau d'interconnexion sur puce dans lequel les agents routeurs ont un rôle actif dans la détection et le traitement de messages erronés. Un routeur est capable de détecter une erreur dans le message reçu grâce au code CRC contenu dans le message, et de marquer en conséquence le message comme étant erroné. Enfin, l'agent envoyeur est avertit de l'erreur détectée. Les routeurs sont également capable dans D1 d'abandonner des messages dont l'adresse de destination est invalide.

Le procédé de communication entre des agents, selon un aspect de l'invention, est destiné à un système d'interconnexion comprenant au moins trois éléments, dans lequel :
un message destiné à un agent récepteur déterminé est envoyé par un agent initiateur de message sur un réseau d'interconnexions point à point,
une détection d'erreur est effectuée et, si une erreur est effectivement détectée, ledit message est marqué comme étant erroné,
le message est acheminé jusqu'audit agent récepteur déterminé si ledit acheminement est possible et, si ledit message est marqué comme étant erroné, l'agent récepteur élabore un message d'erreur et l'envoie à l'agent initiateur pour avertir ledit agent initiateur de la présence d'une erreur.

Dans un mode de réalisation de l'invention, la détection d'erreur est effectuée par un agent intermédiaire du réseau d'interconnexions. L'agent intermédiaire peut être un routeur, un filtre, une interface, etc.

Avantageusement, ledit message est marqué comme étant erroné par le positionnement d'au moins un bit dudit message.

Dans un mode de réalisation de l'invention, l'agent récepteur détecte le marquage du message avant de répondre à l'agent initiateur.

Dans un mode de réalisation de l'invention, la détection dudit marquage du message inhibe le traitement normal du message par l'agent récepteur. Le traitement normal du message peut comprendre le stockage des données contenue dans le message et l'émission d'un message d'accusé de réception, l'émission d'un message contenant des données présentes à une adresse contenue dans le message traité, etc. En d'autres termes, le traitement normal fournit la réponse attendue par l'agent initiateur.

Avantageusement, si le message ne peut être acheminé audit agent récepteur déterminé depuis ledit agent initiateur, alors le message est marqué comme étant erroné et acheminé vers un autre agent récepteur relié au réseau d'interconnexions. L'autre agent récepteur peut être un agent récepteur déterminé. L'autre agent récepteur peut recevoir tous les messages ne pouvant être acheminés depuis ledit agent initiateur. On peut utiliser à cette fin un agent récepteur généralement peu chargé en tâches dans le circuit concerné.

Dans un mode de réalisation de l'invention, si ledit agent récepteur déterminé appartient à une zone d'accès restreint dans laquelle ledit message n'a pas l'autorisation d'entrer, alors ledit message est marqué comme étant erroné puis envoyé audit agent récepteur déterminé nonobstant la restriction d'accès. L'agent récepteur détecte alors le marquage du message avant de répondre à l'agent initiateur, la détection dudit marquage du message inhibant le traitement normal du message par l'agent récepteur. La sécurité de la zone d'accès restreint est ainsi préservée.

L'invention propose également un système de communication entre des agents dans un système d'interconnexion point à point comprenant au moins trois éléments. Le système comprend au moins un agent initiateur capable d'émettre au moins un message destiné à au moins un agent récepteur déterminé, au moins un agent intermédiaire capable d'acheminer au moins un message vers au moins un agent récepteur déterminé, au moins un agent récepteur capable de recevoir au moins un message en provenance d'un agent initiateur par l'intermédiaire d'au moins un agent intermédiaire, des moyens de détection d'erreur et des moyens de marquage de message erroné, l'agent récepteur comprenant des moyens d'élaboration d'un message d'erreur et des moyens d'envoi du message d'erreur à l'agent initiateur pour avertir ledit agent initiateur de la présence d'une erreur.

Dans un mode de réalisation de l'invention, au moins un agent intermédiaire comprend des moyens de détection d'erreur et des moyens de marquage de message erroné.

Dans un mode de réalisation de l'invention, les moyens de marquage de message erroné comprennent un moyen de positionnement d'au moins un bit déterminé dudit message.

Dans un mode de réalisation de l'invention, l'agent récepteur comprend des moyens d'inhibition de l'élaboration d'une réponse à un message erroné et d'élaboration d'un message d'erreur destiné à l'agent initiateur. Les moyens d'inhibition peuvent comprendre un détecteur qui effectue la lecture dudit bit déterminé et émet en sortie un signal numérique envoyé à une entrée d'une porte OU dont la ou les autres entrées peuvent être reliées à la sortie d'autres éléments de détection d'erreur, la sortie de la porte OU pouvant être reliée à une entrée d'inhibition d'un module de traitement de l'agent récepteur. Les moyens mis en oeuvre sont particulièrement simples.

Dans un mode de réalisation de l'invention, au moins un agent intermédiaire comprend des moyens d'acheminement d'un message marqué erroné vers un autre agent récepteur relié au réseau d'interconnexions, lesdits moyens d'acheminement étant actifs si le message ne peut être acheminé audit agent récepteur déterminé depuis ledit agent initiateur.

L'invention s'applique particulièrement aux systèmes de communication intégrés sur une puce électronique.

Les réseaux d'interconnexions assurent une transmission de messages entre différents agents ou entités d'un réseau de communication. Une transmission peut être faite sans effectuer de traitement du message, ou bien en effectuant un traitement du message. On parle dans tous les cas de transmission de messages. On entend par traitement d'un message, par exemple une analyse de données contenues dans le message, ou bien un ajout de données au message.

Un message est, bien entendu, une suite de données informatiques, c'est-à-dire une suite de bits ou d'octets. Chaque message comprend un en-tête de message qui comprend principalement l'adresse de destination du message, la taille du message et le bit de signalement d'erreur.

Les réseaux d'interconnexions sont généralement composés de deux parties distinctes qui interagissent, à savoir une partie matérielle comprenant des liens physiques et un contrôleur de réseaux, câblé ou micro programmé, qui exécute un protocole de bas niveau, et une partie logicielle pour effectuer l'interface avec des fonctions logicielles de plus haut niveau.

Un réseau d'interconnexions idéal serait certainement un réseau totalement interconnecté, c'est-à-dire un réseau dans lequel chaque paire d'agents est connectée par une liaison point-à-point. Cela est cependant irréaliste dès que l'on dépasse quelques dizaines d'agents. Il est donc nécessaire que le réseau d'interconnexions puisse assurer l'ensemble des communications entre agents avec un nombre limité de liens par agent.

Il existe des agents spécialisés pour effectuer un routage ou aiguillage ou transmission des messages circulant sur le réseau d'interconnexions.

Ces réseaux d'interconnexions comprennent des dispositifs de transmission ou routeurs ("switch" en langue anglaise), une organisation du réseau assurant le lien entre les routeurs et les autres agents, et un ensemble de routage qui assure la circulation des messages au sein de l'organisation du réseau.

Un routeur est un agent actif du réseau d'interconnexions qui reçoit en entrée des messages venant d'un ou plusieurs agents et qui achemine ou route chacun de ces messages respectivement vers leur agent de destination ou vers un autre routeur. Ce routage est effectué au moyen de l'adresse de l'agent destinataire du message, qui est présente dans l'en-tête du message à router.

L'organisation d'un réseau constitue la structure physique reliant les différents noeuds ou points de connexions d'un réseau d'interconnexions.

L'ensemble de routage gère la manière dont est routé, ou acheminé, un message depuis un agent source émettant le message vers un agent destinataire du message à travers des routeurs en empruntant un chemin de routage. L'entête de message comprend l'adresse de destination.

Tout agent présent dans un réseau d'interconnexions peut émettre et/ou recevoir des messages. La technique de routage détermine la manière dont les messages sont transmis depuis l'agent émetteur, qui crée le message, vers l'agent destinataire. Pour un réseau d'interconnexions donné, il existe différentes techniques de routage, pour lesquelles les principaux objectifs sont de réduire la latence de fin de message, ou délai d'acheminement de fin de message, d'un message, depuis l'agent émetteur jusqu'à l'agent destinataire, d'augmenter le débit global, et d'améliorer la fiabilité globale du réseau. La latence inclut tous les temps d'attente dus à la manière dont se propagent les messages dans le réseau et plus particulièrement à travers les dispositifs de transmission de messages ayant la charge de router les messages. Le débit est la quantité de données informatiques qu'un lien du réseau peut transporter par unité de temps, et peut être mesuré localement sur un lien du réseau d'interconnexions ou globalement sur l'ensemble du réseau d'interconnexions. La fiabilité d'un réseau est importante, car la probabilité d'erreurs croit rapidement avec le nombre de noeuds dans un réseau d'interconnexions.

Un agent de transmission comprend au moins une entrée comprenant un moyen de mémorisation organisé en file de messages de type premier entré premier sorti ou FIFO ("First In First Out" en langue anglaise) et au moins une sortie comprenant un moyen de transmission de message apte à décider du message à transmettre. Seul les premiers messages des files des entrées sont, bien entendu, visibles pour l'agent de transmission.

L'invention permet donc non seulement une augmentation de la fiabilité d'un système de communication et assure un retour d'information à l'émetteur en cas de message ne pouvant parvenir à destination. L'invention s'applique, en particulier, à la communication asynchrone entre des agents synchrones.

L'invention sera mieux comprise à la lecture de la description détaillée de quelques modes de réalisation pris à titre d'exemples nullement limitatifs et illustrés par les dessins annexés, sur lesquels:
- la figure 1 est une vue d'un dispositif de gestion de communication de messages d'une puce de circuit intégré;
- la figure 2 est une vue de détail de la figure 1; et
- la figure 3 est un schéma illustrant le fonctionnement du dispositif de la figure 1.

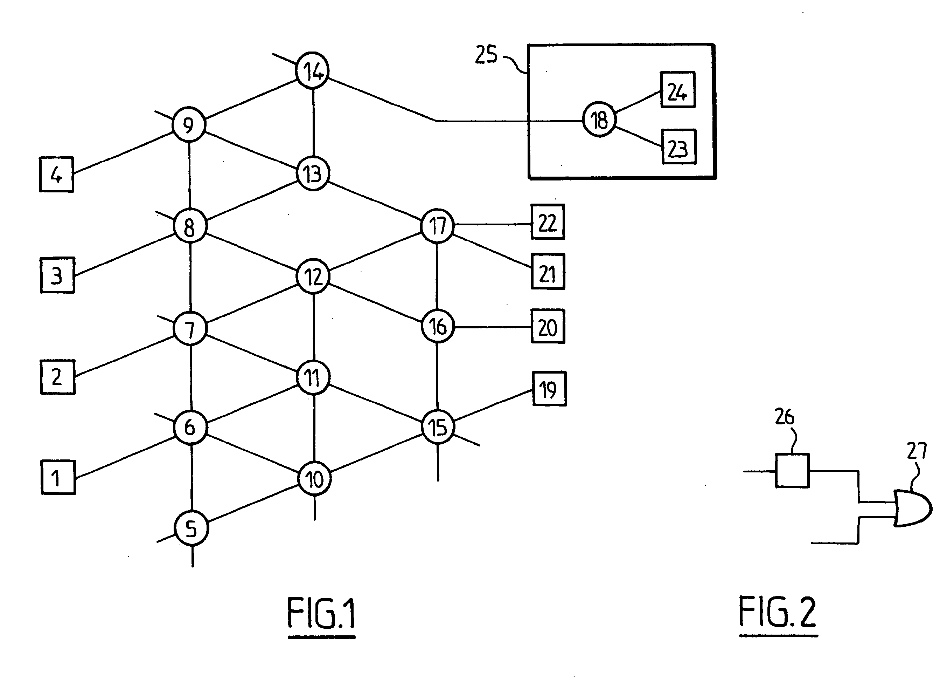

Comme on peut le voir sur la figure 1, un système d'interconnexion bidirectionnel comprend des agents initiateurs de messages référencés 1 à 4, des agents intermédiaires référencés 5 à 18 et des agents destinataires 19 à 24. Un agent initiateur peut être, par exemple, une unité centrale de traitement également désignée par l'acronyme CPU, ou encore une interface externe permettant une communication avec d'autres agents ou d'autres réseaux. Un agent destinataire peut être, par exemple, une mémoire vive dynamique synchrone, dite SDRAM. Un agent intermédiaire peut être, par exemple, un routeur. Un agent intermédiaire peut réaliser, en outre, la compression ou la décompression de données, ou l'encapsulation de données. Le nombre de chacun des agents n'est, bien entendu, pas limité à l'exemple décrit.

Les agents initiateurs 1 à 4 sont respectivement reliés aux agents intermédiaires 6 à 9. Un agent intermédiaire peut être relié à un ou plusieurs agents intermédiaires voisins, à un ou plusieurs agents initiateurs 1 à 4 et/ou à un ou plusieurs agents destinataires 19 à 24 par des liaisons bidirectionnelles. À titre d'exemple, l'agent intermédiaire 6 est relié à l'agent initiateur 1, aux agents intermédiaires 5, 7, 10 et 11 et à un autre élément, non représenté, seule une partie de la connexion étant visible sur la figure 1. L'agent intermédiaire 15 est relié aux agents intermédiaires 10, 11 et 16, à l'agent destinataire 19 et à deux autres agents, non représentés. Chaque agent peut être localement synchrone.

Le système d'interconnexion comprend en outre une zone 25 d'accès restreint, dans laquelle sont disposés les agents destinataires 23 et 24 et comprenant un agent intermédiaire 18 permettant de sélectionner les messages ayant le droit d'accéder aux agents destinataires 23 et 24 des messages qui ne bénéficient pas de ce droit. L'agent intermédiaire 18 est disposé en entrée de la zone d'accès restreint 25 et est relié à l'agent intermédiaire 14, lui-même relié aux agents intermédiaires 9 et 13. L'agent intermédiaire 18 est disposé dans la zone d'accès restreint 25 entre l'agent intermédiaire 14 et les agents destinataires 23 et 24.

Au moins un agent intermédiaire et avantageusement un grand nombre, voire l'ensemble de ceux-ci comprend un moyen de détection d'erreur, par exemple un moyen pour détecter que l'adresse de destination spécifiée dans un message ne peut être atteinte à partir dudit agent intermédiaire, et un moyen de marquage d'erreur, sous la forme d'un bit déterminé du message dont une valeur indique l'absence d'erreur et la valeur complémentaire indique la présence d'une erreur. Ainsi, on peut prévoir que n'importe quel agent intermédiaire du réseau d'interconnexion soit susceptible de marquer un message comme étant erroné, la décision de marquage étant prise en fonction de l'algorithme de l'agent intermédiaire concerné. En pratique, de nombreux agents intermédiaires sont équipés d'algorithmes permettant de vérifier la cohérence des messages qu'ils reçoivent, notamment la cohérence des en-têtes de messages. Par exemple, un contrôleur de mémoire de type DRAM vérifie que le champ d'adresses correspond bien au champ d'adresses valides affecté à l'espace mémoire. Un contrôleur de type MMU vérifie que l'allocation de la zone de données demandées par une unité de traitement est licite. Un agent de commutation vérifie que l'agent cible demandé est bien présent dans le réseau d'interconnexions. En cas d'erreur, il est nécessaire d'informer de l'erreur l'agent initiateur.

En d'autres termes, un agent intermédiaire équipé d'un moyen de détection d'erreur est capable de positionner à un le bit de signalement d'erreur compris dans l'en-tête du message. À cet effet, les agents intermédiaires peuvent être équipés d'une table de routage ou encore d'une table de privilèges permettant de déterminer la destination du message. Si l'adresse spécifiée dans le message ne correspond pas à la table de routage, alors l'agent intermédiaire effectue un signalement d'erreur sur le bit de signalement d'erreur du message. Dans la mesure où l'erreur ne porte pas sur l'adresse, le message marqué comme étant erroné est acheminé en aval de l'agent intermédiaire qui a effectué ledit marquage d'erreur jusqu' à l'agent de destination, et ce dans la mesure du possible.

À titre d'exemple, un message émanant de l'agent initiateur 2 peut être traité par l'agent intermédiaire 7, puis traité et marqué comme étant erroné par l'agent intermédiaire 12, puis traité par l'agent intermédiaire 16 qui l'envoie à l'agent de destination 20. L'agent de destination 20 détecte le bit de signalement d'erreur contenu dans l'en-tête du message, élabore un message d'erreur et l'envoie à l'agent initiateur 2, par exemple par les agents intermédiaires 16, 15, 11, 12, puis 7. L'agent initiateur 2 a alors connaissance du fait que le message a été considéré comme erroné et n'a donc pas fait l'objet d'un traitement normal, par exemple une écriture, l'agent de destination 20 étant une mémoire de type ROM.

Par ailleurs, il se produit des cas où l'acheminement du message vers sa destination normale n'est pas possible. Alors, l'agent intermédiaire qui constate l'impossibilité d'acheminement du message positionne le bit de signalement d'erreur sur la valeur erreur, à moins que cela n'ait été fait au préalable par un autre agent intermédiaire et envoie le message marqué comme erroné vers un autre agent récepteur qui peut être choisi de façon aléatoire ou, de préférence, toujours le même dans un circuit intégré donné.

En effet, dans de nombreux circuits, on peut constater qu'un agent de destination traite relativement peu de messages et est donc moins chargé que les autres agents de destination. On choisit alors d'envoyer tous les messages marqués comme étant erronés et ne pouvant être acheminés à leur destination normale vers l'agent de destination prévu pour recevoir l'ensemble de ce type de messages.

À titre d'exemple, on peut prévoir que l'agent de destination 21 reçoive l'ensemble des messages marqués comme erronés et ne pouvant être acheminés à leur destination normale dans le système d'interconnexion représenté. Un message émis par l'agent initiateur 4, traité par l'agent intermédiaire 9, est repéré alors comme contenant une adresse inexistante dans le système d'interconnexion et marqué comme erroné par l'agent intermédiaire 9, acheminé à l'agent intermédiaire 13 puis à l'agent intermédiaire 17 et enfin acheminé à l'agent de destination 21. Comme vu précédemment, l'agent de destination 21 détecte le bit de signalement d'erreur, ce qui inhibe tout traitement normal dudit message, et élabore un message d'erreur adressé à l'agent initiateur 4.

Le fonctionnement de la zone d'accès restreint 25 est le suivant. L'agent intermédiaire 18 effectue une vérification de l'adresse contenue dans les messages qu'il reçoit en provenance de l'agent intermédiaire 14, du privilège dont bénéficie ledit message et du bit de signalement d'erreur. Si au moins l'une de ces trois vérifications s'avère négative, en d'autres termes, si l'adresse est erronée, le privilège est insuffisant ou le bit de signalement d'erreur est activé, l'agent intermédiaire 18 marque ledit message comme étant erroné en positionnant le bit de signalement d'erreur, si cela n'a pas encore été effectué, par un agent intermédiaire situé en amont, puis envoie ledit message marqué comme étant erroné à l'agent de destination 23, 24 auquel ledit message est destiné, si l'erreur ne porte pas sur l'adresse, et à l'agent de destination 21 recevant l'ensemble des messages à adresse erronée dans l'autre cas. L'agent intermédiaire 18 assure la double fonction de contrôle d'accès et de routage.

À réception d'un message marqué comme étant erroné, l'agent de destination 23, 24 de la zone d'accès restreinte 25 détecte le positionnement du bit de signalement d'erreur et élabore un message d'erreur puis envoie ledit message d'erreur à l'agent initiateur pour avertir ledit agent initiateur de la présence d'une erreur. Ainsi, un message n'ayant pas l'autorisation d'accès à la zone d'accès restreint 25 est néanmoins acheminé jusqu'à l'agent de destination indiqué dans l'en-tête dudit message si l'adresse est exacte. Mais, le traitement normal du message est inhibé par le positionnement du bit de signalement d'erreur qui interdit le traitement normal dudit message et provoque l'élaboration puis l'émission d'un message d'erreur adressé à l'agent initiateur.

Les moyens mis en oeuvre dans les agents intermédi aires 5 à 18 sont particulièrement simples et sont essentiellement des moyens logiciels. Les agents de destination 19 à 24 peuvent être équipés de deux modules relativement simples, un module 26 de lecture du bit de signalement d'erreur contenu dans le message, et une porte OU 27. Le module 26 peut être un décodeur de l'en-tête du message programmé pour envoyer sur sa sortie reliée à la porte OU 27, un signal de niveau identique ou inversé par rapport au bit de signalement d'erreur.

Le module 26 est relié à l'entrée de l'agent de destination 19 à 24 et une de ses sorties est reliée à une entrée de la porte OU 27 faisant partie de l'agent de destination. L'autre ou les autres entrées de la porte OU 27 peuvent être reliées à des sorties d'autres modules de vérification du message, par exemple un module de vérification d'adresse, ou encore un module de vérification d'autorisation. La sortie de la porte OU 27 peut être reliée à deux entrées, l'une provoquant l'inhibition du traitement normal du message, et l'autre provoquant l'élaboration d'un message d'erreur. En d'autres termes, la porte OU 27 peut être le seul élément matériel ajouté à un agent de destination pour mettre en oeuvre l'invention.

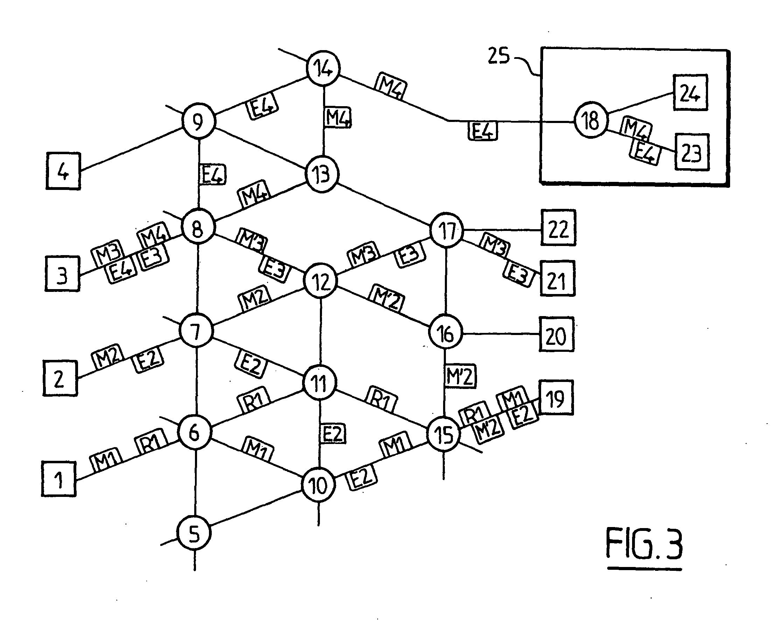

Quelques exemples de fonctionnement du système d'interconnexion sont illustrés sur la figure 3. Un message M1 émis par l'agent initiateur 1 est transmis par les agents intermédiaires 6, 10 et 15, puis atteint l'agent de destination 19. L'agent de destination 19 élabore alors une réponse R1 transmise à l'agent initiateur 1 par les agents intermédiaires 15, 11 et 6.

Un message M2 est émis par l'agent initiateur 2 et transmis par les agents intermédiaires 7, 12, 16 et 15 et atteint l'agent de destination 19. Toutefois, l'agent intermédiaire 12 détecte une erreur comprise dans le message M2 et effectue le positionnement du bit de signalement d'erreur contenu dans ledit message M2 désigné ensuite M'2. L'agent de destination 19 reçoit donc le message M'2 marqué comme erroné, détecte le bit de signalement d'erreur dudit message M'2, inhibe le traitement normal du message M'2 et élabore un message d'erreur E2 qu'il envoie à l'agent initiateur 2, par les agents intermédiaires 15, 10, 11 et 7.

L'agent initiateur 3 émet un message M3 comportant une adresse erronée. Le système d'interconnexion représenté comprend six agents de destination, ce qui nécessite une adresse codée sur trois bits. Il subsistera néanmoins deux combinaisons non utilisées parmi les huit possibilités d'adresses codées sur trois bits. Il peut donc se produire une erreur dans la génération de l'adresse par l'agent initiateur 3 qui aboutit à doter le message M3 d'une adresse n'existant pas dans la système d'interconnexion représenté. Le message M3 est reçu par l'agent intermédiaire 8, qui détecte l'erreur dans l'adresse de destination contenue dans le message M3, positionne le bit de signalement d'erreur et envoie le message M'3 marqué comme erroné vers l'agent de destination 21 recevant l'ensemble des messages ne pouvant être acheminés vers leur destination normale. Le message M'3 est routé par les agents intermédiaires 12 et 17, puis atteint l'agent de destination 21. L'agent de destination 21 détecte le bit de signalement d'erreur du message M'3 et élabore un message d'erreur E3 destiné à l'agent initiateur 3 et passant par les agents intermédiaires 17, 12 puis 8.

L'agent initiateur 3 peut également élaborer un message M4 destiné à l'agent de destination 23, mais dépourvu de l'autorisation d'accès à la zone d'accès restreint 25. Le message M4 comprend donc l'adresse de l'agent de destination 23, est envoyé et passe par les agents intermédiaires 8, 13, 14 et 18. L'agent intermédiaire 18 détecte l'absence d'autorisation du message M4 pour accéder à l'agent de destination 23. L'agent intermédiaire 18 positionne alors le bit de signalement d'erreur du message M4 et achemine le message M'4 marqué comme erroné vers l'agent de destination 23. L'agent de destination 23 reçoit le message M'4 marqué comme erroné, détecte le positionnement du bit de signalement d'erreur et n'exécute donc pas les instructions contenues dans le message M'4. L'agent de destination 23 élabore un message d'erreur E4 destiné à l'agent initiateur 3. Le message d'erreur E4 est acheminé par les agents intermédiaires 18, 14, 9 et 8 jusqu'à l'agent initiateur 3.

A titre de variante, on peut prévoir que l'en-tête des messages comprenne une zone de signalement d'erreur s'étendant sur plusieurs bits, par exemple sur un octet, de façon qu'une information relative à la nature de l'erreur puisse être codée dans la zone de signalement d'erreur. L'agent de destination peut insérer la zone de signalement d'erreur dans le message d'erreur adressé à l'agent initiateur. L'agent initiateur bénéficie d'une meilleure connaissance des erreurs qui se produisent.

On comprend donc que l'invention permet un traitement judicieux des erreurs avec un signalement d'erreurs adressé à l'initiateur du message erroné, en utilisant les propriétés d'un système d'interconnexion point à point sur circuit intégré, en mettant en oeuvre des moyens matériels extrêmement réduits et des moyens logiciels qui n'affectent pas significativement les performances du réseau d'interconnexion. Bien au contraire, le fonctionnement du système d'interconnexion est amélioré par le traitement généralisé des messages erronés tout en se passant de la présence d'un élément spécialisé de traitement des erreurs qui requiert des liaisons supplémentaires qui lui seront dédiées. On évite que les agents intermédiaires ne doivent générer un message d'erreur, ce qui nécessiterait des agents intermédiaires de structure compliquée. Les agents intermédiaires exécutent leur mission classique de transmettre un message et ne font que modifier un bit en cas d'erreur, ce qui reste simple à faire et peu coûteux. Les liaisons peuvent rester inchangées par rapport à un réseau d'interconnexion ne mettant pas en oeuvre l'invention.

## Revendications

1. Procédé de communication entre des agents dans un système d'interconnexion sur puce comprenant au moins trois agents, dans lequel un message destiné à un agent récepteur (19, ..., 24) déterminé est envoyé par un agent initiateur (1, 2, 3, 4) de message sur un réseau d'interconnexions point à point, **caractérisé en ce que** :
- une détection d'erreur est effectuée par un agent intermédiaire (5, ..., 17) du réseau d'interconnexions dans le message envoyé et, si une erreur est effectivement détectée, ledit agent intermédiaire marque ledit message comme étant erroné, ledit message étant marqué comme étant erroné si ledit agent récepteur déterminé appartient à une zone d'accès restreint (25) dans laquelle ledit message n'a pas l'autorisation d'entrer,
- le message est acheminé jusqu'audit agent récepteur déterminé si ledit acheminement est possible et, si ledit message est marqué comme étant erroné, l'agent récepteur élabore un message d'erreur et l'envoie à l'agent initiateur pour avertir ledit agent initiateur de la présence d'une erreur.

2. Procédé selon la revendication 1, dans lequel ledit message est marqué comme étant erroné par le positionnement d'au moins un bit dudit message.

3. Procédé selon la revendication 1 ou 2, dans lequel l'agent récepteur détecte le marquage du message avant de répondre à l'agent initiateur.

4. Procédé selon la revendication 3, dans lequel la détection dudit marquage du message inhibe le traitement normal du message par l'agent récepteur.

5. Système de communication entre des agents dans un système d'interconnexion point à point sur puce comprenant au moins un agent initiateur (1, ..., 4) capable d'émettre au moins un message destiné à au moins un agent récepteur déterminé, au moins un agent intermédiaire (5, ..., 17) capable d'acheminer au moins un message vers au moins un agent récepteur déterminé, au moins un agent récepteur (19, ..., 24) capable de recevoir au moins un message en provenance d'un agent initiateur par l'intermédiaire d'au moins un agent intermédiaire comprenant des moyens de détection d'erreur dans le message émis, **caractérisé en ce qu'**il comprend des moyens de marquage de message erroné, ledit message est marqué comme étant erroné si ledit agent récepteur déterminé appartient à une zone d'accès restreint dans laquelle ledit message n'a pas l'autorisation d'entrer, l'agent récepteur (19, ..., 24) comprenant des moyens d'élaboration d'un message d'erreur et des moyens d'envoi du message d'erreur à l'agent initiateur pour avertir ledit agent initiateur de la présence d'une erreur.

6. Système selon la revendication 5, **caractérisé par le fait qu'**au moins un agent intermédiaire (5, ..., 17) comprend des moyens de détection d'erreur et des moyens de marquage de message erroné.

7. Système selon la revendication 5 ou 6, **caractérisé par le fait que** les moyens de marquage de message erroné comprennent un moyen de positionnement d'au moins un bit déterminé dudit message.

8. Système selon l'une quelconque des revendications 5 à 7, **caractérisé par le fait que** l'agent récepteur (19, ..., 24) comprend des moyens d'inhibition de l'élaboration d'une réponse à un message erroné.

## Claims

1. Method of communication between agents in an on-chip interconnect system comprising at least three agents, in which a message intended for a determined receiving agent (19, ..., 24) is sent by a message initiating agent (1, 2, 3, 4) over a point-to-point interconnect network, **characterized in that**:
- an error detection is performed by an intermediate agent (5, ..., 17) of the interconnect network in the message sent and, if an error is actually detected, said intermediate agent marks said message as being errored, said message being marked as being errored if said determined receiving agent belongs to a restricted access zone (25) in which said message is not authorized to enter,
- the message is routed to said determined receiving agent if said routing is possible and, if said message is marked as being errored, the receiving agent creates an error message and sends it to the initiating agent to notify said initiating agent of the presence of an error.

2. Method according to Claim 1, in which said message is marked as being errored by the setting of at least one bit of said message.

3. Method according to Claim 1 or 2, in which the receiving agent detects the marking of the message before responding to the initiating agent.

4. Method according to Claim 3, in which the detection of said marking of the message inhibits the normal processing of the message by the receiving agent.

5. System of communication between agents in an on-chip point-to-point interconnect system comprising at least one initiating agent (1, ..., 4) capable of sending at least one message intended for at least one determined receiving agent, at least one intermediate agent (5, ..., 17) capable of routing at least one message to at least one determined receiving agent, at least one receiving agent (19, ..., 24) capable of receiving at least one message from an initiating agent via at least one intermediate agent comprising means of detecting errors in the message sent, **characterized in that** it comprises errored message marking means, said message is marked as being errored if said determined receiving agent belongs to a restricted access zone in which said message is not authorized to enter, the receiving agent (19, ..., 24) comprising means of creating an error message and means of sending the error message to the initiating agent to notify said initiating agent of the presence of an error.

6. System according to Claim 5, **characterized in that** at least one intermediate agent (5, ..., 17) comprises error detection means and errored message marking means.

7. System according to Claim 5 or 6, **characterized in that** the errored message marking means comprise a means of setting at least one determined bit of said message.

8. System according to any one of Claims 5 to 7, **characterized in that** the receiving agent (19, ..., 24) comprises means of inhibiting the creation of a response to an errored message.

## Patentansprüche

1. Verfahren zur Kommunikation zwischen Agenten in einem auf einem Chip vorhandenen Verbindungssystem mit mindestens drei Agenten, wobei eine für einen vorgegebenen Empfangsagenten (19,...,24) bestimmte Nachricht von einem nachrichteninitiierenden Agenten (1,2,3,4) über ein Punkt-zu-Punkt-Verbindungsnetz gesendet wird, **dadurch gekennzeichnet, daß**
- von einem Zwischenagenten (5,...,17) des Verbindungsnetzes eine Fehlerdetektion in der gesendeten Nachricht durchgeführt wird und, falls ein Fehler tatsächlich detektiert wird, der Zwischenagent diese Nachricht als fehlerhaft markiert, wobei die Nachricht als fehlerhaft markiert wird, falls der vorgegebene Empfangsagent zu einer Zone beschränkten Zugangs (25) gehört, für welche die Nachricht keine Zugangsberechtigung hat,
- die Nachricht bis zu dem vorgegebenen Empfangsagenten weitergeleitet wird, falls die Weiterleitung möglich ist, und, falls die Nachricht als fehlerhaft markiert ist, der Empfangsagent eine Fehlernachricht ausarbeitet und sie zu dem initiierenden Agenten sendet, um dem initiierenden Agenten das Vorhandensein eines Fehlers zu melden.

2. Verfahren nach Anspruch 1, in welchem durch Setzen mindestens eines Bits der Nachricht die Nachricht als fehlerhaft markiert wird.

3. Verfahren nach Anspruch 1 oder 2, in welchem der Empfangsagent die Markierung der Nachricht detektiert, bevor er dem initiierenden Agenten antwortet.

4. Verfahren nach Anspruch 3, in welchem die Detektion der Markierung der Nachricht die normale Verarbeitung der Nachricht durch den Empfangsagenten verhindert.

5. System zur Kommunikation zwischen Agenten in einem auf einem Chip vorhandenen Punkt-zu-Punkt-Verbindungssystem mit
mindestens einem initiierenden Agenten (1,...,4), der mindestens eine Nachricht, die für mindestens einen vorgegebenen Empfangsagenten bestimmt ist, senden kann,
mindestens einem Zwischenagenten (5,...,17), der mindestens eine Nachricht zu mindestens einem vorgegebenen Empfangsagenten weiterleiten kann,
mindestens einem Empfangsagenten (19,...,24), der mindestens eine von einem initiierenden Agenten über mindestens einen Zwischenagenten herkommende Nachricht empfangen kann, mit Einrichtungen zur Detektion eines Fehlers in der gesendeten Nachricht,
**dadurch gekennzeichnet, daß** es Einrichtungen zum Markieren der fehlerhaften Nachricht aufweist, wobei die Nachricht als fehlerhaft markiert wird, falls der vorgegebene Empfangsagent zu einer Zone beschränkten Zugangs gehört, für welche die Nachricht keine Zugangsberechtigung hat, wobei der Empfangsagent (19,...,24) Einrichtungen zum Ausarbeiten einer Fehlernachricht und Einrichtungen zum Senden der Fehlernachricht zu dem initiierenden Agenten hat, um dem initiierenden Agenten das Vorhandensein eines Fehlers zu melden.

6. System nach Anspruch 5, **dadurch gekennzeichnet, daß** mindestens ein Zwischenagent (5,...,17) Einrichtungen zur Fehlerdetektion und Einrichtungen zum Markieren einer fehlerhaften Nachricht aufweist.

7. System nach Anspruch 5 oder 6, **dadurch gekennzeichnet, daß** die Einrichtungen zum Markieren einer fehlerhaften Nachricht eine Einrichtung zum Setzen mindestens eines vorgegebenen Bits der Nachricht haben.

8. System nach einem der Ansprüche 5 bis 7, **dadurch gekennzeichnet, daß** der Empfangsagent (19,...,24) Einrichtungen zum Unterdrücken der Ausarbeitung einer Antwort auf die fehlerhafte Nachricht aufweist.
